# EUROPÄISCHE PATENTANMELDUNG

(11) **EP 2 187 103 A1**
(43) Veröffentlichungstag der Anmeldung: **19.05.2010**
(21) Anmeldenummer: 08019892.2
(22) Anmeldetag: 14.11.2008
(51) Int. Cl.: F16J 15/32

(54) **Dichtring, Kraftübertragungselement für einen Dichtring und Dichtungsanordnung**

(71) Anmelder: Carl Freudenberg KG, 69469 Weinheim (DE)
(72) Erfinder: Wüstenhagen, Guido, 21077 Hamburg (DE); Günther, Hans-Werner, 31623 Drakenburg (DE); Von Borstel, Dieter, 21720 Guderhandviertel (DE); Müller, Kristian, 60322 Frankfurt (DE)

(57) **Zusammenfassung**

Dichtring, umfassend zumindest eine Dichtlippe (1), die eine Tasche (7) umfasst, in der ein ringförmiges Kraftübertragungselement (8) mit einer Federkraft angeordnet ist, deren Richtung zumindest teilweise senkrecht zur Richtung (2) einer abzudichtenden Oberfläche (3) eines abzudichtenden Maschinenelements (4) verläuft. Das Kraftübertragungselement (8) besteht aus einem magnetisierten Elastomerwerkstoff.

## Beschreibung

### Technisches Gebiet

Die Erfindung betrifft einen Dichtring, umfassend zumindest eine Dichtlippe, die eine Tasche für ein ringförmiges Kraftübertragungselement umfasst, in der das Kraftübertragungselement angeordnet ist, dessen Kraftrichtung zumindest teilweise senkrecht zur Richtung einer abzudichtenden Oberfläche eines abzudichtenden Maschinenelements verläuft.

### Stand der Technik

Solche Dichtringe sind allgemein bekannt und z. B. als Radialwellendichtringe zur Abdichtung von Wellen ausgebildet, die zumindest eine Dichtlippe umfassen, die durch ein ringförmiges Kraftübertragungselement in radialer Richtung an eine abzudichtende Oberfläche eines abzudichtenden Maschinenelements dichtend andrückbar ist. Das Kraftübertragungselement ist dabei durch eine Ringwendelfeder aus einem metallischen Werkstoff gebildet, die dafür sorgt, dass die Dichtlippe auch dann dichtend an die abzudichtende Oberfläche des abzudichtenden Maschinenelements angedrückt wird, wenn im abzudichtenden Raum nur ein geringer relativer Überdruck herrscht.

Die Ringwendelfeder dient bei sich betriebsbedingt verändernden Materialeigenschaften des verwendeten Elastomers der Aufrechterhaltung des Anpressdrucks der Dichtlippe an die abzudichtende Oberfläche des abzudichtenden Maschinenelements. Sich verändernde Materialeigenschaften können beispielsweise durch Alterung oder Versprödung entstehen. Außerdem gleicht das Kraftübertragungselement geometrische Änderungen des Dichtrings aufgrund von betriebsbedingtem Verschleiß der Dichtlippe aus.
Nachteile einer Ringwendelfeder aus metallischem Werkstoff sind wenig zufriedenstellende Gebrauchseigenschaften insbesondere dann, wenn die Ringwendelfeder verschmutzt. Weitere Nachteile sind die aufwendige und dadurch kostenintensive Herstellung und Montage, die Gefahr des Herausspringens der Feder bei der Montage und dass sich während der bestimmungsgemäßen Verwendung des Dichtrings das Federschloss der Ringwendelfeder öffnen kann.
Außerdem können durch Ringwendelfedern nur Druckkräfte, nicht jedoch bedarfsweise Zugkräfte auf die Dichtlippe übertragen werden.

Aus der EP 1 806 523 A1 ist ein weiterer Dichtring bekannt. Die Dichtlippe, die mehrere Dichtkanten aufweist, besteht aus einem elastomeren Werkstoff, in dem magnetisierte Partikel angeordnet sind. Die Dichtlippe kann senkrecht zur Richtung einer abzudichtenden Oberfläche einer Welle magnetisiert sein, wobei die magnetisierte Dichtlippe mit ihren Dichtkanten dadurch verstärkt an die abzudichtende Oberfläche angedrückt wird.

### Darstellung der Erfindung

Der Erfindung liegt die Aufgabe zugrunde, einen Dichtring der eingangs genannten Art derart weiter zu entwickeln, dass der Dichtring während einer langen Gebrauchsdauer gleichbleibend gute Gebrauchseigenschaften aufweist. Die zuvor geschilderten Nachteile sollen vermieden werden.

Diese Aufgabe wird erfindungsgemäß mit den Merkmalen von Anspruch 1 gelöst. Auf vorteilhafte Ausgestaltungen nehmen die darauf rückbezogenen Unteransprüche Bezug.

Zur Lösung der Aufgabe ist es vorgesehen, dass das Kraftübertragungselement aus einem magnetisierten Etastomerwerkstoff besteht.
Hierbei ist von Vorteil, dass der Anpressdruck, mit dem die Dichtlippe die abzudichtende Oberfläche des abzudichtenden Maschinenelements dichtend anliegend berührt, nicht durch eine herkömmliche Ringwendelfeder aus metallischem Werkstoff aufgebracht wird, sondern durch magnetische Anziehung oder magnetische Abstoßung der Dichtlippe. Bei einer derartigen Ausgestaltung ist von Vorteil, dass, mit Ausnahme des ringförmigen Kraftübertragungselements, die Dichtlippe aus einem herkömmlichen, nichtmagnetisierten Elastomerwerkstoff bestehen kann, was in fertigungstechnischer und wirtschaftlicher Hinsicht von hervorzuhebendem Vorteil ist.
Außerdem ist bei einer derartigen Ausgestaltung von Vorteil, dass Ringwendelfedern aus metallischem Werkstoff, wie sie im Stand der Technik Verwendung finden, durch ein entsprechend dimensioniertes ringförmiges Kraftübertragungselement aus magnetisierte Elastomerwerkstoff einfach und kostengünstig ersetzt werden können. Durch ein einfaches Austauschen werden die eingangs genannten Nachteile der metallischen Ringwendelfeder vermieden und gleichbleibend gute Gebrauchseigenschaften während einer langen Gebrauchsdauer sichergestellt. Konstruktive Änderungen an der Dichtlippe sind dazu nicht erforderlich.

Die Dichtlippe kann zumindest eine Dichtkante umfassen wobei die zumindest eine Dichtkante frei von magnetisierten Partikeln und unmagnetisiert ist. Bevorzugt sind alle Dichtkanten frei von magnetisierten Partikeln und unmagnetisiert.
Durch die Magnetisierung des Krdftübertragungselementes kann die Dichtkante der Dichtlippe aus einem für den Anwendungsfall besonders geeigneten Werkstoff bestehen. Dadurch, dass die Dichtlippe keine Zusatzfunkftion erfüllen muss, wie beispielsweise das Aufbringen von magnetischen Kräften durch magnetisierbare Partikel, die im Elastomerwerkstoff der Dichtlippe angeordnet sind, sind keine Kompromisse bezüglich der eigentlichen Funktion der Dichtlippe erforderlich. Neben einer guten Anpassung an den jeweiligen Anwendungsfall ist auch eine besonders verschleißarme Berührung der abzudichtende Oberfläche durch die Dichtlippe möglich, weil die abzudichtende Oberfläche nicht mit magnetisierbaren Partikeln, die sich in der Dichtlippe befinden und abrassiv wirken, in Berührung kommt.

Das Kraftübertragungselement kann in radialer oder axialer Richtung oder in beliebiger Richtung magnetisiert sein. Die Richtung der Magnetisierung ist davon abhängig, ob die Dichtlippe !die abzudichtende Oberfläche unter elastischer radialer oder unter elastischer axialer Vorspannung dichtend berührt.

Das Kraftübertragungselement kann zumindest teilweise aus einem magnetisierten Elastomerwerkstoff bestehen. Zu den magnetisierbaren Materialien gehört z. B. Strontium-Ferrit (SrFeO), das gut in Werkstoffe, insbesondere Elastomere, eingearbeitet werden kann, kostengünstig und rostfrei ist. Die magnetisierbaren Partikel können durch Seltene-Erden-Verbindungen wie Neodym-Eisen-Bor oder Samarium-Cobalt gebildet sein. Prinzipiell kann jeder Dichtungswerkstoff verwendet werden, der magnetisches Material aufnehmen kann und sich in eine gewünschte Form bringen lässt.

Das Kraftübertragungselement kann kraft-, stoff und / oder formschlüssig in der Tasche angeordnet sein, abhängig von der erforderlichen Haltekraft, mit der das Kraftübertragungselement in der Tasche angeordnet sein muss. Durch diese verliersichere Anordnung des Kraftüberlragungselements innerhalb der Tasche kann die Dichtlippe, abhängig von der Richtung der Magnetisierung des Kraftübertragungselements, entweder verstärkt an die abzudichtende Oberfläche des abzudichtenden Maschinenelements angedrückt werden; oder die elastische Vorspannung, mit der die Dichtlippe die abzudichtende Oberfläche berührt, kann reduziert werden, beispielsweise um den Verschleiß der Dichtlippe zu reduzieren und dadurch die Gebrauchsdauer des Dichtrings zu erhöhen. Durch ein derart mit der Tasche verbundenes Kraftübertragungselement können sowohl Druck- als auch Zugkräfte auf die Dichtlippe aufgebracht werden.

Das in der Tasche angeordnete Krraftübertragungselement kann außen- oder innenumfangsseitig der Dichtlippe angeordnet sein. Außenumfangsseitig der Dichtlippe ist das Kraftübertragungselement dann angeordnet, wenn der Dichtring als Radialwellendichtring ausgebildet ist und eine abzudichtende Welle unter radialer elastischer Vorspannung außenumfangsseitig dichtend umschließt. Gelangt der Dichtring demgegenüber zu Abdichtung eines hohlzylindrischen Gehäuses zur Anwendung, ist das Kraftübertragungselement innenumfangsseitig der Dichtlippe angeordnet und drückt diese radial nach außen an die abzudichtende Oberfläche des Gehäuses an.
Es ist von hervorzuhebendem Vorteil, dass der Dichtring in der Dichtungsanordnung in beliebiger Raumrichtung verbaut werden kann, da durch das magnetisierte Kraftübertragungselement stets eine gute Abdichtung auf der abzudichtenden Oberfläche sichergestellt ist; Dichtringe mit Ringwendelfedern aus metallischem Werkstoff können demgegenüber nicht in beliebiger Raumrichtung verbaut werden, weil die Ringwendelfedem immer nur eine Federkraft radial in Richtung der Ringwendelfedern selbst haben.

Für einen sicheren Sitz des Dichtrings in seinem Einbauraum ist es häufig zweckmäßig, dass der Dichtring einen Stützkörper aufweist. Der Dichtring wird dann während seiner bestimmungsgemäßen Verwendung sicher in seiner Einbauposition gehalten.

Die Dichtlippe kann mit einem Stützkörper aus einem nicht-magnetischen Werkstoff elastisch nachgiebig verbunden sein. Dieser nicht-magnetische Werkstoff des Stützrings ist bei dem beanspruchten Dichtring von Vorteil, weil der nicht-magnetische Werkstoff die für eine gute Abdichtung erforderliche Anziehungs- oder Abstoßungskraft des Kraftübertragungselements auf die Dichtlippe nicht nachteilig beeinflusst. Die Magnetkraft wirkt dann definiert und unbeeinflusst vom Stützkörper.

Der Stützkörper kann aus einem Gewebeband bestehen. Das Gewebeband kann bedarfsweise mit einer Armierung versehen sein, die ebenfalls aus einem nicht-magnetisierbaren Werkstoff besteht und die Formbeständigkeit des Stützkörpers erhöht.

Im Stützkörper kann ein in Richtung der Dichtlippe magnetisierter Permanentmagnet angeordnet sein, wobei die Richtung der Magnetisierung des Permanentmagnets davon abhängig ist, in welcher Richtung das Kraftübertragungselement magnetisiert ist.
Zwei vorteilhafte Ausgestaltungen: Ist das Kraftübertragungselement in radialer Richtung magnetisiert, ist auch der Permanentmagnet in dieser Richtung magnetisiert. Ist das Kraftübertragungselement demgegenüber in axialer Richtung magnetisiert, trifft dies auch auf die Richtung der Magnetisierung des Permanentmagneten zu.
Die Verwendung eines solchen Permanentmagneten ist dann erforderlich, wenn beispielsweise die abzudichtende Oberfläche und / oder das abzudichtende Maschinenelement aus einem nicht-magnetisierbaren Werkstoff bestehen.
Das Kraftübertragungselement und der Permanentmagnet können derart magnetisiert sein, dass sich ein Nordpol des Kraftübertragungselements und ein Südpol des Permanentmagneten benachbart gegenüberliegen. Der Nordpol des Kraftübertragungselements und der Südpol des Permanentmagneten ziehen sich dann an. In einem solchen Fall wird der Anpressdruck der Dichtlippe an der abzudichtenden Oberfläche des abzudichtenden Maschinenelements reduziert; eine solche Reduzierung der Anpresskraft kann dann sinnvoll sein, wenn die abzudichtenden Drücke sehr gering sind und/oder eine besonders lange Standzeit der Dichtlippe gewünscht ist.
Liegen sich demgegenüber jeweils der Nordpol des Kraftübertragungselements und der Nordpol des Permanentmagneten oder deren jeweilige Südpole gegenüber, stoßen sich das Kraftübertragungselement und der Permanentmagnet gegenseitig ab. Dadurch, dass der Permanentmagnet mit dem Stützkörper ortsfest verbunden ist und nur die Dichtlippe retativ elastisch nachgiebig ist, wird diese durch die Abstoßung verstärkt an die abzudichtende Oberfläche des abzudichtenden Moschinenelements angedrückt.

Der Permanentmagnet kann als magnetisierte Elastomerspur ausgebildet sein. Eine solche magnetisierte Elastomierspur lässt sich einfach und kostengünstig in einen als Gewebeband ausgebildeten Stützkörper einfügen.

Die Erfindung betrifft außerdem ein Kraftübertragungselement für einen Dichtring, wie zuvor beschrieben, wobei das Kraftübertragungselement ringförmig ausgebildet ist und aus einem magnetisierten Elastomerwerkstoff besteht. Hierbei ist von Vorteil, dass Ringwendelfedern aus metallischem Werkstoff, wie sie im Stand der Technik Verwendung finden, einfach gegen das beanspruchte Kraftübertragungselement austauschbar sind. Die eingangs genannten Nachteile von metallischen Kingwendelfedern, beispielsweise eine eingeschränkte Funktion bei Verschmutzung, werden durch den Austausch der metallischen Ringwendelfeder gegen das beanspruchte Kraftübertragungselement vermieden und der Dichtring weist dadurch gleichbleibend gute Gebrauchseigenschaften während einer langen Gebrauchsdauer auf. Dies insbesondere auch dann, wenn er einer verstärkten Beaufschlagung mit Verunreinigungen ausgesetzt ist.

Außerdem betrifft die Erfindung eine Dichtungsanordnung, umfassend einen Dichtring, wie zuvor beschrieben, dessen Dichtlippe eine abzudichtende Oberfläche eines abzudichtenden Maschinenelements dichtend anliegend berührt. Die Anpresskraft der Dichtlippe an die abzudichtende Oberfläche des abzudichtenden Maschinenelements ist dabei abhängig von der Größe und der Richtung der Magnetkraft des Kraftübertragungselements, die auf die Dichtlippe des Dichtrings wirkt.

### Kurzbeschreibung der Zeichnung

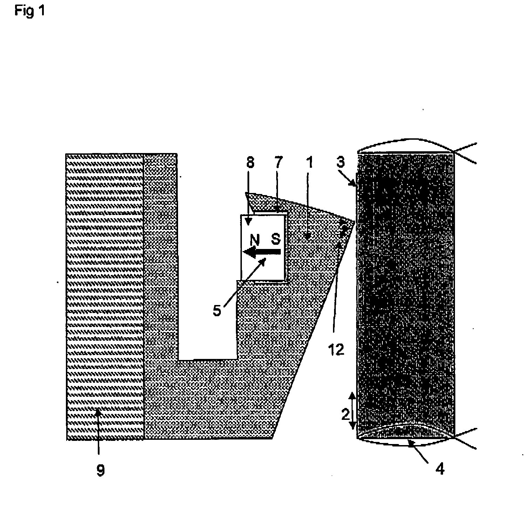

Drei Ausführungsbeispiele einer erfindungsgemäßen Dichtungsanordnung, die jeweils den erfindungsgemäßen Dichtring umfasst, werden nachfolgend anhand der Figuren 1 bis 3 näher erläutert.

Diese zeigen jeweils in schematischer Darstellung:
- Fig. 1: ein erstes Ausführungsbeispiel, bei dem das abzudichtende Maschinenelement von einer Welle aus Stahl gebildet ist,

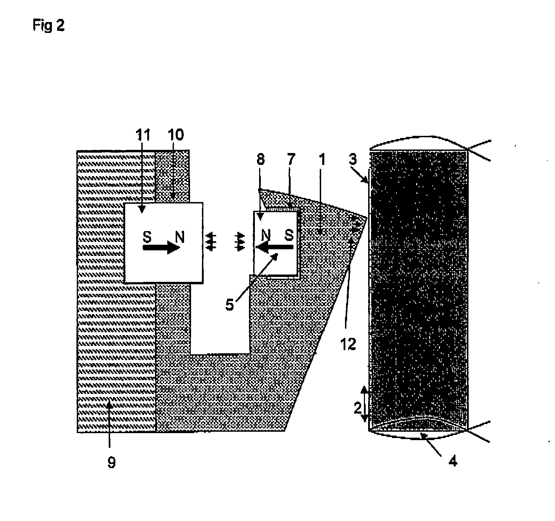

- Fig. 2: ein zweites Ausführungsbeispiel, bei dem das abzudichtende Maschinenelement aus einem nicht-magnetisierbaren Werkstoff besteht, wobei innerhalb des Stützkörpers ein Permanentmagnet angeordnet und derart magnetisiert ist, dass die dichtende Anpressung der Dichtlippe auf der abzudichtenden Oberfläche des abzudichtenden Maschinenelements verstärkt wird,

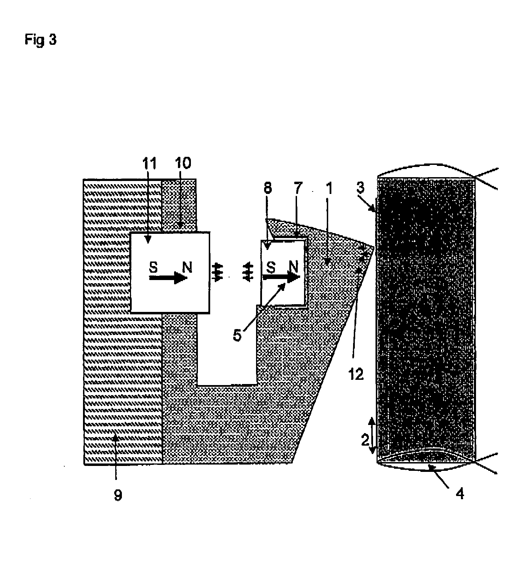

- Fig. 3: ein drittes Ausführungsbeispiel, bei dem das abzudichtende Maschinenelement aus einem nicht-magnetisiebaren Werkstoff besteht; wobei innerhalb des Stützkörpers ein Permanentmagnet angeordnet und derart magnetisiert ist, dass die dichtende Anpressung der Dichtlippe auf der abzudichtenden Oberfläche des abzudichtenden Maschinenelements reduziert wird.

### Ausführung der Erfindung

In den Figuren 1 bis 3 ist jeweils eine Dichtungsanordnung mit einem Dichtring gezeigt, wobei der Dichtring eine dynamisch beanspruchte Dichtlippe 1 mit einer Dichtkante 15 umfasst. Das Kraftübertragungselement 8 ist senkrecht zur Richtung 2 der abzudichtenden Oberfläche 3 des abzudichtenden Maschinenelements 4 magnetisiert.

In den Figuren 1 bis 3 sind Ausführungsbeispiele gezeigt, bei denen das Kraftübertragungselement 8 in radialer Richtung 5 magnetisiert ist. Die abzudichtende Oberfläche 3 erstreckt sich in diesen Ausführungsbeispielen jeweils in axialer Richtung.

Die Dichtlippe 1 in den Ausführungsbeispielen Fig. 1 bis 3 umfasst eine Tasche 7 und ein in der Tasche 7 angeordnetes ringförmiges Kraftübertragungselement 8, Das kraftübertragungselement 8 besteht aus einem magnetisierten Elastomerwerkstoff und ist derart innerhalb der Tasche 7 angeordnet, dass die Magnetkräfte senkrecht zur Richtung 2 der abzudichtenden Oberfläche 3 auf die Dichtlippe 1 wirken. Die Magnetkräfte können, abhängig von der Magnetisierung des Kraftübertragungselements 8, Druck- oder Zugkräfte sein.

Die Dichtlippe 1 ist in den gezeigten Ausführungsbeispielen jeweils elastisch nachgiebig mit dem Stützkörper 9 verbunden, der aus einem nicht-magnetisierbaren Werkstoff, in den gezeigten Ausführungsbeispielen aus einem Gewebeband, besteht.

In Fig. 1 ist ein erstes Ausführungsbeispiel des erfindungsgemäßen Dichtrings gezeigt. Das abzudichtende Maschinenelement 4 mit seiner abzudichtenden Oberfläche 3 ist durch eine Stahlwelle gebildet, die außenumfangsseitig von der Dichtlippe 1 des Dichtrings unter elastischer Vorspannung anliegend und dichtend umschlossen ist. Das Kraftübertragungselement 8 besteht aus einem magnetisierten Elastomerwerkstoff, der in radialer Richtung magnetisiert ist, so dass sich in Zusammenwirkung mit der Stahlwelle eine Magnetkraft 12 ergibt, die zu einer erhöhten Anpressung der Dichtlippe 1 an die abzudichtende Oberfläche 3 führt.

In Fig. 2 ist ein zweites Ausführungsbeispiel eines Dichtrings gezeigt, ähnlich dem Ausführungsbeispiel aus Fig. 1, wobei davon abweichend das abzudichtende Maschinenelement aus einem nicht-magnetisierbaren Werkstoff besteht. Bei einem solchen Werkstoff könnte es sich beispielsweise um einen polymeren Werkstoff oder um Edelstahl handeln.

Eine verstärkte Anpressung der Dichtlippe 1 an die abzudichtenden Oberfläche 3 des abzudichtenden Maschinenelements 4 erfolgt in diesem Ausführungsbeispiel dadurch, dass im Stützkörper 9 ein in Richtung der Dichtlippe 1 magnetisierter Permanentmagnet 10 angeordnet ist.
Die Magnetisierung des Kraftübertragungselements 8 und des Permanentmagnets 10 ist dabei derart vorgenommen, dass sich gleiche Pole gegenüberliegen und deshalb abstoßen. Da der Permanentmagnet mit einem als Gewebeband ausgebildeten Stützkörper 9 ortsfest verbunden ist, ist nur die Dichtlippe 1 zwischen dem Stützkörper 9 und dem abzudichtenden Maschinenelement 4 in radialer Richtung relativ hin- und herbeweglich, so dass die magnetische Abstoßungskraft zwischen dem Kraftübertragungselement 8 und dem Permanentmagnet 10 eine zusätzliche Anpressung der Dichtlippe 1 an die abzudichtende Oberfläche 3 des abzudichtenden Maschinenelements 4 bewirkt.

In Fig. 3 ist ein drittes Ausführungsbeispiel des erfindungsgemäßen Dichtrings gezeigt, ähnlich dem Ausführungsbeispiel aus Fig. 2, wobei abweichend davon der Permanentmagnet 10 derart magnetisiert ist, dass sich entgegengesetzte Pole von Kraftübertragungselement 8 und Permanentmagnet 10 radial benachbart gegenüber liegen. Daraus resultiert eine magnetische Anziehungskraft, die eine Reduzierung der Anpressung der Dichtlippe 1 auf der abzudichtenden Oberfläche 3 bewirkt. Eine solche Reduzierung der Anpresskraft kann beispielsweise dann gewünscht sein, wenn der Verschleiß der Dichtkante 15 der Dichtlippe 1 reduziert werden soll.

In den Ausführungsbeispielen gemäß Fig. 1 bis 3 besteht der Stützkörper 9 aus einem nicht-magnetisierbaren Werkstoff, so dass der Stützkörper 9 keinen unerwünscht nachteiligen Einfluss auf die resultierende Magnetkraft 12 haben kann.

Die Dichtlippe 1 und ihrer Dichtkante 15 bestehen aus einem Elastomerwerkstoff, frei von magnetisierbaren Partikeln und deshalb unmagnetisiert.

Die Dichtlippen 1 aus den Ausführungsbeispielen gemäß Fig. 1 bis 3 können auch in axialer Richtung zum Beispiel an eine abzudichtende Radiallauffläche anlegbar sein.

## Patentansprüche

1. Dichtring, umfassend zumindest eine Dichtlippe (1), die eine Tasche (7) für ein ringförmiges Kraftübertragungselement (8) umfasst, in der das Kraftübertragungselement (8) mit einer Federkraft angeordnet ist, deren Richtung zumindest teilweise senkrecht zur Richtung (2) einer abzudichtenden Oberfläche (3) eines abzudichtenden Maschinenelements (4) verläuft, **dadurch gekennzeichnet, dass** das Kraftübertragungselement (8) aus einem magnetisierten Elastomerwerkstoff besteht.

2. Dichtring nach Anspruch 1, **dadurch gekennzeichnet, dass** die Dichtlippe (1) zumindest eine Dichtkante (15) umfasst und dass die zumindest eine Dichtkante (15) frei von magnetisierbaren Partikeln und unmagnetisiert ist.

3. Dichtring nach Anspruch 2, **dadurch gekennzeichnet, dass** alle Dichtkanten (15) frei von magnetisierbaren Partikeln und unmagnetisiert sind.

4. Dichtring nach einem der Ansprüche 1 bis 3, **dadurch gekennzeichnet, dass** das Kraftübertragungselement (8) in radialer (5) oder axialer Richtung (6) magnetisiert ist.

5. Dichtring nach einem der Ansprüche 1 bis 4, **dadurch gekennzeichnet, dass** das Kraftübertragungselement (8) kraft-, stoff- und/oder formschlüssig in der Tasche (7) angeordnet ist.

6. Dichtring nach einem der Ansprüche 1 bis 5, **dadurch gekennzeichnet, dass** das in der Tasche (7) angeordnete Kraftübertragungselement (8) außen- oder innenumfangsseitig der Dichtlippe (1) angeordnet ist.

7. Dichtring nach einem der Ansprüche 1 bis 6, **dadurch gekennzeichnet, dass** die Dichtlippe (1) mit einem Stützkörper (9) aus einem nicht-magnetisierbaren Werkstoff elastisch nachgiebig verbunden ist.

8. Dichtring nach Anspruch 7, **dadurch gekennzeichnet, dass** der Stützkörper (9) aus einem Gewebeband besteht.

9. Dichtring nach einem der Ansprüche 7 oder 8, **dadurch gekennzeichnet, dass** im Stützkörper (9), abhängig von der Richtung (5, 6) der Magnetisierung des Kraftübertragungselements (8), entsprechend radial oder axial benachbart zur Dichtlippe (1) ein in Richtung der Dichtlippe (1) magnetisierter Permanentmagnet (10) angeordnet ist.

10. Dichtring nach Anspruch 9, **dadurch gekennzeichnet, dass** der Permanentmagnet (10) als magnetisierte Elastomerspur (11) ausgebildet ist.

11. Kraftübertragungselement für einen Dichtring nach einem der Ansprüche 1 oder 4 bis 6, das ringförmig ausgebildet ist und aus einem magnetisierten Elastomerwerkstoff besteht.

12. Dichtungsanordnung, umfassend einen Dichtring nach einem der Ansprüche 1 bis 10, dessen Dichtlippe (1) eine abzudichtende Oberfläche (3) eines abzudichtenden Maschinenelements (4) dichtend anliegend berührt.
